# FASCICULE DE BREVET EUROPEEN

(11) **EP 3 453 141 B1**
(45) Date de publication et mention de la délivrance du brevet: **11.08.2021**
(21) Numéro de dépôt: 17725707.8
(22) Date de dépôt: 02.05.2017
(51) Int. Cl.: H04L 12/28, H04L 12/24

(54) **PROCÉDÉ DE CONTRÔLE D'UNE PASSERELLE RÉSIDENTIELLE D'UN RÉSEAU DE COMMUNICATION, PROCÉDÉ DE SUPERVISION, PROCÉDÉ D'EXÉCUTION D'UNE ACTION, DISPOSITIFS ET PROGRAMME D'ORDINATEUR CORRESPONDANTS**
VERFAHREN ZUR STEUERUNG EINES RESIDENTIAL GATEWAY AUS EINEM KOMMUNIKATIONSNETZ, VERFAHREN ZUR ÜBERWACHUNG, VERFAHREN ZUR AUSFÜHRUNG EINER AKTION, ENTSPRECHENDE VORRICHTUNGEN UND COMPUTERPROGRAMM
METHOD OF CONTROLLING A RESIDENTIAL GATEWAY FROM A COMMUNICATION NETWORK, METHOD OF SUPERVISION, METHOD OF EXECUTING AN ACTION, CORRESPONDING DEVICES AND COMPUTER PROGRAM

(30) Priorité: 02.05.2016 FR 1653933
(43) Date de publication de la demande: 13.03.2019
(73) Titulaire: ORANGE, 92130 Issy-les-Moulineaux (FR)
(72) Inventeur: BOUCADAIR, Mohamed, 35830 Betton (FR); BINET, David, 35590 La Chapelle Thouarault (FR); JACQUENET, Christian, 35131 Pont-Pean (FR)
(74) Mandataire: Vidon Brevets & Stratégie
(86) Numéro de dépôt international: PCT/FR2017/051048
(87) Numéro de publication internationale: WO 2017/191407

(56) Documents cités:
- EP-A1- 2 413 533
- EP-A1- 2 552 084
- KR-A- 20050 078 547
- US-A1- 2007 242 601
- US-A1- 2014 010 541
- US-A1- 2014 359 149
- SUSUMU NISHIHARA ET AL: "Power-saving methods with guaranteed service interoperability in ethernet passive optical networks", IEEE COMMUNICATIONS MAGAZINE, IEEE SERVICE CENTER, PISCATAWAY, US, vol. 50, no. 9, 1 septembre 2012 (2012-09-01), pages 110-117, XP011460170, ISSN: 0163-6804, DOI: 10.1109/MCOM.2012.6295720

## Description

### 1. Domaine de l'invention

Le domaine de l'invention est celui des communications au sein d'un réseau de communication.

Plus précisément, l'invention offre une solution pour contrôler à distance au moins une passerelle résidentielle d'un réseau de communication, par exemple pour l'éteindre, la mettre en veille, la redémarrer, la mettre à jour, etc.

L'invention trouve donc des applications dans tout réseau de communication mettant en œuvre au moins une passerelle résidentielle (domestique ou d'entreprise).

### 2. Art antérieur

Le réseau IP (« Internet Protocol ») est le support universel d'une multitude de services et applications.

Pour accéder à ces services ou applications, une passerelle résidentielle, encore appelée « box », HG pour « Home Gateway » ou CPE pour « Customer Premises Equipment », est classiquement installée chez un utilisateur. En d'autres termes, une passerelle résidentielle sert d'interface entre le réseau local de l'utilisateur et le réseau IP d'un opérateur. C'est donc l'élément concentrateur par lequel transite l'ensemble des connexions, le trafic caractéristique des différents services souscrits par l'utilisateur, et qui supporte également un ensemble d'applications fournies par un opérateur de télécommunications.

Par exemple, une passerelle résidentielle permet à un utilisateur d'accéder à des « multi-services » IP permettant simultanément un accès à Internet, à des contenus vidéo (dont la diffusion de programmes télévisés) et à des services conversationnels (téléphonie sur IP).

L'installation et la gestion de la passerelle résidentielle, pour l'accès aux services d'accès à Internet ainsi qu'aux services de téléphonie et de télévision notamment, sont classiquement effectuées par l'utilisateur, puisque la passerelle résidentielle est installée chez l'utilisateur.

Or les utilisateurs n'ont pas toujours les compétences nécessaires ou la capacité d'intervenir sur la passerelle résidentielle pour configurer certains paramètres, pour la débrancher en cas d'événement météorologique tel qu'un orage, pour la redémarrer suite à un incident, une mise à jour, etc.

De plus, à la différence des équipements déployés par les opérateurs de télécommunications dans leurs réseaux de transport, ces passerelles résidentielles, installées chez les utilisateurs, ne sont pas secourues en cas de problème. En d'autres termes, il n'existe pas de mécanisme de secours permettant de préserver la continuité des services souscrits par un utilisateur dans le cas où une passerelle résidentielle présente un dysfonctionnement (par exemple, une panne électrique).

Une telle indisponibilité a ainsi pour effet de rendre l'accès aux services indisponible, ce qui peut avoir des conséquences fâcheuses non seulement pour l'utilisateur (par exemple l'incapacité d'utiliser le service de téléphonie pour émettre des appels d'urgence ou pour appeler les services techniques de l'opérateur pour signaler une défaillance sur la ligne), mais également pour l'opérateur (par exemple surcharge d'appels aux services techniques, surcharge du réseau si la panne électrique impacte un nombre important d'utilisateurs, etc.).

La demande de brevet publiée sous le numéro de publication US2014010541 décrit un appareil pour utiliser l'interopérabilité des services dans les réseaux EPON pour mettre en oeuvre une gestion de l'énergie Ethernet efficace sur le réseau EPON. Le fournisseur de services peut mettre à jour dynamiquement les politiques d'Ethernet économe en énergie en fonction du temps d'utilisation et des services fournis. Le paramétrage de la politique de contrôle Ethernet économe en énergie peut être utilisé pour contrôler la consommation et l'efficacité énergétique tout en maintenant un niveau de performance acceptable.

Il existe donc un besoin pour une nouvelle technique permettant de contrôler à distance une passerelle résidentielle.

### 3. Exposé de l'invention

L'invention concerne donc, selon un premier aspect, divers procédés.

Elle concerne ainsi, premièrement, un procédé de redémarrage d'une passerelle résidentielle suivant la revendication 1.

On rappelle que le contexte de configuration d'une passerelle résidentielle est associé aux services fournis par la passerelle aux dispositifs connectés à cette passerelle.

Grâce à ces dispositions, le réseau de communication étendu peut contrôler à distance au moins une passerelle résidentielle, en lui transmettant des messages d'action via la couche liaison de données (couche 2 du modèle OSI).

Il est notamment possible pour le réseau étendu de contrôler la passerelle résidentielle en utilisant des trames Ethernet, en particulier lorsqu'il n'existe pas, ou plus, de connexion IP entre l'entité d'exécution et la passerelle (i.e., lorsqu'il n'est pas, ou plus, possible de communiquer avec la passerelle via la couche IP). L'adresse MAC (Medium Access Control, Contrôle d'Accès au Medium) peut ainsi être utilisée pour identifier d'une manière non-ambiguë une passerelle résidentielle et, par conséquent, utiliser les seules ressources de la couche liaison de données pour échanger des informations avec la passerelle résidentielle.

On considère ici que les passerelles résidentielles sont intégrées dans la chaîne de supervision, ce qui permet d'assurer une continuité de service lorsque des évènements de différente nature ont pour effet de dégrader ou de rendre indisponibles les services souscrits par un client/utilisateur. Ainsi, grâce à l'activation de cette technique, le/les services sont toujours fournis à l'utilisateur, même en cas de défaillance de la passerelle résidentielle.

De plus, le réseau étendu peut agir à distance sur une passerelle résidentielle de façon complètement transparente pour l'utilisateur, c'est-à-dire en évitant notamment de le solliciter pour qu'il intervienne lui-même sur sa passerelle. Cette technique met ainsi en œuvre des comportements autonomes de nature à préserver la continuité de service en cas de défaillance de la passerelle. On augmente ainsi les niveaux de qualité et de disponibilité des services souscrits par les utilisateurs, et tels que perçus par les utilisateurs.

La solution proposée permet également de réduire les sollicitations aux services techniques de l'opérateur/fournisseur de services, puisque l'opérateur peut intervenir directement sur la passerelle de son client/utilisateur. On diminue ainsi les coûts associés aux services techniques de l'opérateur.

Elle permet également d'optimiser les coûts de l'opérateur, en évitant les sources de pannes qui peuvent nécessiter un remplacement matériel.

Selon des caractéristiques particulières, ladite passerelle met également en oeuvre la réception d'un ordre de redémarrage de ladite passerelle, transmis dans ledit premier message d'action ou dans un deuxième message d'action généré par ladite entité d'exécution et transmis au niveau de la couche liaison de données.

Grâce à ces dispositions, l'ordre de redémarrage pourra, comme l'ordre d'extinction, être reçu par la passerelle même lorsqu'il n'existe pas, ou plus, de connexion IP entre l'entité d'exécution et la passerelle.

Ces différentes actions peuvent être mises en oeuvre de façon immédiate ou différée.

C'est pourquoi, selon d'autres caractéristiques particulières, le premier et/ou deuxième message d'action comprend au moins un indicateur temporel d'exécution de l'ordre d'extinction et/ou l'ordre de redémarrage.

En effet, plusieurs variantes sont envisageables :
- ordre d'extinction immédiate ou différée,
- ordre d'extinction et de démarrage immédiats,
- ordre d'extinction immédiate et de démarrage différé,
- ordre d'extinction et de démarrage différés.

Par exemple, il est possible de programmer l'extinction d'une passerelle résidentielle à un instant t, puis le redémarrage de la passerelle à un instant (t+1), pour minimiser le risque de dégradation/détérioration en cas d'orage violent survenu entre les instants t et (t+1).

Selon encore d'autres caractéristiques particulières, ladite passerelle met également en oeuvre la transmission, à ladite entité d'exécution ou à un dispositif de supervision du réseau de communication étendu, dudit contexte de configuration du réseau local.

Grâce à ces dispositions, le contexte de configuration pourra être utilisé par le dispositif de supervision afin d'offrir à un utilisateur une continuité de service si une panne de communication entre la passerelle résidentielle et un terminal de l'utilisateur est détectée, et ainsi préserver le niveau de satisfaction de l'utilisateur.

Par exemple, ce contexte de configuration pourra être dupliqué et activé dans un point d'accès de secours pendant ladite panne. En particulier, un équipement du réseau local (par exemple un terminal, une passerelle résidentielle « interne ») peut utiliser l'identifiant d'une connexion locale au réseau via ladite au moins une passerelle résidentielle pour se raccorder au réseau via ledit point d'accès de secours. Cet identifiant peut notamment être un SSID (initiales des mots anglais « *Service Set Identifier* » signifiant « Identifiant d'Ensemble de Service »). Aucune modification des terminaux locaux n'est requise.

Selon encore d'autres caractéristiques particulières, ladite passerelle met en outre en oeuvre la transmission, à ladite entité d'exécution, d'un message d'annonce indiquant la ou les actions pouvant être exécutée(s) par ladite passerelle, ledit message d'annonce étant transmis lors du rattachement de la passerelle au réseau de communication étendu, et/ou périodiquement, et/ou en réponse à un message de découverte transmis par l'entité d'exécution.

Selon encore d'autres caractéristiques particulières, ladite passerelle met en outre en oeuvre un enregistrement d'informations de configuration de ladite passerelle, et une transmission desdites informations de configuration à ladite entité d'exécution ou à un dispositif de supervision du réseau de communication étendu.

Au moyen de ces informations de configuration, un utilisateur peut, par exemple, indiquer son souhait de recevoir un SMS avant le redémarrage de la passerelle résidentielle, peut configurer des plages horaires pendant lesquelles une mise à jour et un redémarrage de la passerelle peuvent être exécutés, peut souhaiter donner son autorisation avant qu'une action soit engagée, ou souscrire à une offre de continuité de service.

L'invention concerne aussi, deuxièmement, un procédé de contrôle du redémarrage d'une passerelle résidentielle suivant la revendication 5.

Grâce à ces dispositions, le réseau étendu peut éteindre et faire redémarrer une passerelle résidentielle de façon complètement transparente pour l'utilisateur, c'est-à-dire en évitant notamment de le solliciter pour qu'il intervienne lui-même sur sa passerelle.

Selon des caractéristiques particulières, ledit ordre de redémarrage est transmis par ladite entité d'exécution soit dans ledit premier message d'action, soit dans un deuxième message d'action généré par ladite entité d'exécution et transmis au niveau de la couche liaison de données.

Selon d'autres caractéristiques particulières, ladite étape de génération d'un premier message d'action met en œuvre les sous-étapes suivantes :
- réception d'au moins un message de commande en provenance d'un dispositif de supervision du réseau de communication étendu, comprenant l'ordre d'extinction, éventuellement l'ordre de redémarrage, et au moins un paramètre de configuration, et
- génération dudit premier message d'action, en tenant compte de l'ordre d'extinction, éventuellement de l'ordre de redémarrage, et dudit au moins un paramètre de configuration.

Selon des caractéristiques encore plus particulières, ledit au moins un paramètre de configuration appartient au groupe comprenant :
- un identifiant de la passerelle,
- une clé de sécurité,
- un indicateur temporel d'exécution de l'ordre d'extinction, et
- une activation d'envoi d'un rapport au dispositif de supervision après exécution de l'ordre d'extinction.

Selon d'autres caractéristiques particulières, ladite entité d'exécution met en œuvre une étape préalable de vérification de la capacité de la passerelle à exécuter une action ordonnée par l'entité d'exécution, ladite étape de vérification comprenant la transmission d'un message de découverte interrogeant ladite passerelle sur ses capacités, et la réception d'un message d'annonce indiquant la ou les actions pouvant être exécutée(s) par ladite passerelle.

L'invention concerne aussi, troisièmement, un procédé de supervision du redémarrage d'une passerelle résidentielle suivant la revendication 9.

Grâce à ces dispositions, le réseau étendu peut détecter un dysfonctionnement d'une passerelle résidentielle, et décider d'engager une action de type extinction puis redémarrage de la passerelle pour résoudre le problème.

Selon des caractéristiques particulières, ledit dispositif de supervision met en œuvre les étapes suivantes, préalablement à l'extinction de ladite passerelle :
- réception d'un contexte de configuration du réseau local associé à ladite passerelle, et
- duplication et activation dudit contexte de configuration dans un point d'accès de secours.

Grâce à ces dispositions, on peut assurer la continuité de service au moyen d'un point d'accès de secours pendant l'indisponibilité de la passerelle.

Selon des caractéristiques encore plus particulières, un équipement du réseau local utilise l'identifiant de ladite passerelle dans le réseau local pour se raccorder au réseau de communication étendu via ledit point d'accès de secours.

Selon un deuxième aspect, l'invention concerne divers dispositifs.

Elle concerne ainsi, premièrement, une passerelle résidentielle suivant la revendication 12.

Une telle passerelle résidentielle est notamment adaptée à mettre en œuvre le procédé de redémarrage, tel que décrit précédemment. Ainsi, une telle passerelle pourra comporter les différentes caractéristiques relatives au procédé de redémarrage selon l'invention, qui peuvent être combinées ou prises isolément. Les moyens de réception d'un message d'action et d'exécution de l'action mettent par exemple en œuvre au moins un processeur et une mémoire.

L'invention concerne aussi, deuxièmement, une entité d'exécution d'un réseau de communication suivant la revendication 13.

Une telle entité d'exécution est notamment adaptée à mettre en œuvre le procédé de contrôle décrit précédemment. Ainsi, une telle entité pourra comporter les différentes caractéristiques relatives au procédé de contrôle selon l'invention, qui peuvent être combinées ou prises isolément. En particulier, une telle entité d'exécution peut être hébergée dans un central téléphonique. Elle peut notamment comprendre des moyens physiques et/ou logiciels. Les moyens de génération et de transmission du message d'action mettent par exemple en œuvre au moins un processeur et une mémoire.

Selon des caractéristiques particulières, ledit ordre de redémarrage est transmis par ladite entité d'exécution soit dans ledit premier message d'action, soit dans un deuxième message d'action généré par ladite entité d'exécution et transmis au niveau de la couche liaison de données.

L'invention concerne aussi, troisièmement, un dispositif de supervision d'un réseau de communication étendu suivant la revendication 14.

Un tel dispositif de supervision est notamment adapté pour mettre en œuvre le procédé de supervision décrit précédemment. Ainsi, un tel dispositif pourra comporter les différentes caractéristiques relatives au procédé de supervision selon l'invention, qui peuvent être combinées ou prises isolément. En particulier, un tel dispositif de supervision peut être de type CSC (initiales des mots anglais « *Customer Support Center* » signifiant « Centre d'Assistance Clients »). Les moyens d'obtention d'informations, de décision, et de transmission mettent par exemple en œuvre au moins un processeur et une mémoire.

Un tel dispositif de supervision peut notamment s'interfacer avec des plateformes de gestion d'incidents clients ou réseau pour détecter un dysfonctionnement impliquant une passerelle résidentielle, et décider d'engager une action pour résoudre ces incidents.

On notera que, dans un mode de réalisation particulier, ledit dispositif de supervision et ladite entité d'exécution peuvent être hébergés par le même équipement.

Les avantages de ces dispositifs sont essentiellement les mêmes que ceux des procédés exposés succinctement ci-dessus.

Selon un mode de réalisation, l'invention concerne un ou plusieurs programmes d'ordinateur comportant des instructions pour la mise en œuvre d'au moins un procédé tel que décrit ci-dessus, lorsque ce ou ces programme(s) est ou sont exécuté(s) par un processeur.

Les procédés selon l'invention peuvent donc être mis en œuvre de diverses manières, notamment sous forme câblée et/ou sous forme logicielle.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente un exemple de réseau de communications dans lequel peut être mise en œuvre l'invention ;
- les figures 2, 3 et 4 illustrent les principales étapes mises en œuvre par un procédé de contrôle de passerelles résidentielles, un procédé d'exécution d'au moins une action, et un procédé de supervision respectivement ;
- les figures 5, 6, 8 et 9 illustrent des exemples d'échanges de messages entre une entité d'exécution et une passerelle résidentielle ;
- la figure 7 présente un exemple de solution pour assurer une continuité de service en cas d'indisponibilité d'une passerelle résidentielle.
- la figure 10 présente la structure simplifiée d'une entité d'exécution mettant en œuvre un procédé de contrôle de passerelles résidentielles selon la figure 2.

### 5. Description d'un mode de réalisation de l'invention

### 5.1 Principe général

Le principe général de l'invention repose sur l'envoi, par une entité d'exécution d'un réseau de communication, d'au moins un message d'action à destination d'une ou plusieurs passerelles résidentielles (domestiques et/ou d'entreprise) du réseau de communication, de façon à pouvoir contrôler à distance la ou les passerelles par le réseau.

En particulier, le message d'action est transmis au niveau de la couche liaison de données, et a par exemple pour destination une adresse MAC d'une passerelle résidentielle, ce qui permet de contrôler la passerelle même en cas de perte de connectivité IP de la passerelle (par exemple, échec d'allocation d'adresse IP à la passerelle).

L'invention offre donc une solution pour une gestion automatisée des passerelles résidentielles, c'est-à-dire ne nécessitant pas l'intervention de l'utilisateur, gestion qui est intégralement pilotée et négociée par l'opérateur via son réseau.

De cette façon, selon au moins un mode de réalisation de l'invention, les différentes passerelles raccordées à un réseau de communication peuvent être redémarrées sur instruction transmise par le réseau, sans intervention de la part de l'utilisateur, tout en préservant la continuité des services souscrits par un utilisateur pendant la durée de l'incident.

Différentes actions peuvent ainsi être engagées à distance.

Par exemple, le redémarrage automatique des passerelles résidentielles permet de simplifier le traitement des incidents sans intervention de l'utilisateur. La programmation d'un démarrage différé permet de mettre hors service une passerelle résidentielle pendant le temps que durent des évènements de nature à affecter son fonctionnement, tels que les orages, et d'ainsi éviter une détérioration matérielle des passerelles ou de l'installation électrique du client. L'opérateur réseau peut ainsi commander des passerelles de façon à ce qu'elles soient mises hors service automatiquement si certains évènements sont observés voire planifiés ou anticipés.

On note que, selon un mode de réalisation particulier de l'invention, des préférences utilisateurs peuvent être configurées de manière à ce que lesdites actions soient exécutées au niveau des passerelles résidentielles en tenant compte des contraintes et exigences des utilisateurs. Il peut être également envisagé que les passerelles disposent de configurations par défaut de ces préférences, aptes à autoriser ou à refuser les actions demandées par le réseau.

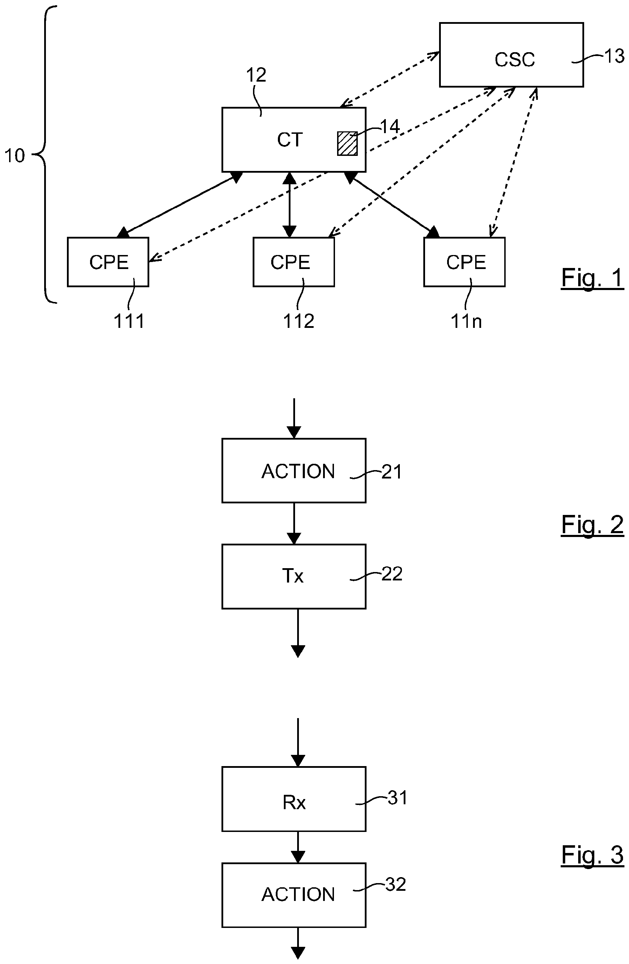

On présente à titre d'exemple, en relation avec la figure 1, un réseau de communication 10 dans lequel peut-être mise en œuvre l'invention.

On considère un réseau 10 comprenant par exemple trois passerelles résidentielles, notées CPE (111, 112 et 11n). Ces passerelles sont raccordées à un équipement hébergé dans un central téléphonique CT 12 (« central office » en anglais), et permettent d'accéder au réseau Internet. Le central téléphonique alimente les lignes de raccordement aux passerelles selon des instructions fournies par une plateforme de gestion de l'opérateur, par exemple un dispositif (ou centre) de supervision des passerelles résidentielles 13 (CSC). Ces instructions peuvent être configurées au préalable (c'est-à-dire que le central téléphonique 12 n'a pas besoin de contacter le dispositif de supervision 13 pour la prise de décision), récupérées à la demande, etc. Eventuellement, le central téléphonique 12 et le dispositif de supervision 13 sont co-localisés.

Par exemple, si l'on considère un réseau de distribution optique (« Optical Distribution Network (ODN) » en anglais), les lignes de raccordement aux passerelles sont des fibres optiques qui sont connectées à un équipement de terminaison de type OLT (en anglais « Optical Line Termination »). D'autres technologies d'accès au réseau Internet peuvent bien entendu être envisagées dans le cadre de l'invention (par exemple, ADSL, 3G, 4G, 5G, WLAN, etc.).

L'invention n'est donc pas limitée par la/les technologie(s) d'accès utilisée(s) par la ou les passerelles résidentielles, par les fonctions supportées par la ou les passerelles résidentielles, par la nature et/ou le nombre de services accessibles via la ou les passerelles résidentielles, etc.

La figure 2 illustre les principales étapes mises en oeuvre par une entité d'exécution selon l'invention, pour contrôler au moins une passerelle résidentielle. Une telle entité d'exécution, référencée 14 en relation avec la figure 1, peut être hébergée dans un central téléphonique 12 (c'est-à-dire dans un équipement existant du central téléphonique, par exemple un OLT, ou dans un équipement dédié à l'exécution des fonctions de l'entité d'exécution).

Au cours d'une première étape, l'entité d'exécution 14 du réseau de communication génère (21) un message d'action décrivant au moins une action à effectuer par au moins une passerelle résidentielle CPE (111, 112, 11n).

L'entité d'exécution 14 transmet (22) ensuite ce message d'action à la ou aux passerelles résidentielles CPE (111, 112, 11n), au niveau de la couche liaison de données, de façon immédiate ou différée.

La figure 3 illustre les principales étapes mises en oeuvre par une passerelle résidentielle selon l'invention, pour exécuter la ou les actions commandées par l'entité d'exécution 14.

Au cours d'une première étape, une passerelle, CPE 112 par exemple, reçoit (31) le message d'action émis par l'entité d'exécution 14.

Au cours d'une étape suivante, elle exécute (32) cette action, de façon immédiate ou différée, selon les paramètres de configuration du message d'action.

On note que la décision d'engager une action au niveau d'une passerelle résidentielle peut être prise par l'entité d'exécution 14, par exemple en tenant compte de configurations préalables. Ainsi, un redémarrage d'une passerelle résidentielle peut être engagé sur détection automatique de certains incidents.

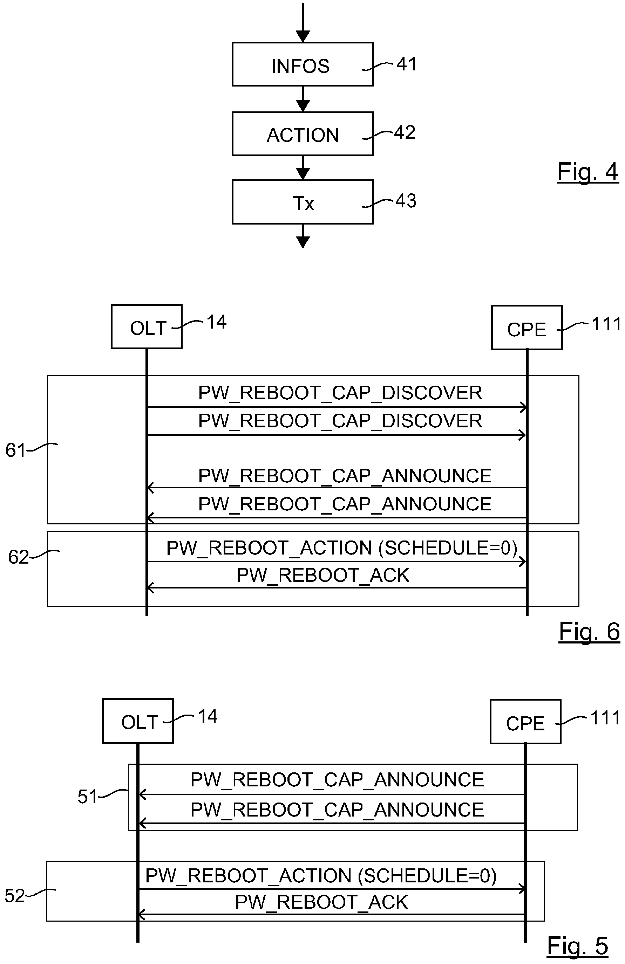

Selon un autre mode de réalisation, la décision d'engager une action au niveau d'une passerelle résidentielle peut être prise par le dispositif de supervision 13 du réseau de communication, puis transmise à l'entité d'exécution 14. Selon ce mode de réalisation, les principales étapes mises en œuvre par le dispositif de supervision selon l'invention, pour superviser au moins une passerelle résidentielle, sont illustrées en figure 4.

Un tel dispositif peut tout d'abord obtenir (41) des informations relatives à la ou aux passerelles résidentielles du réseau.

A partir de ces informations, le dispositif de supervision 13 décide (42) d'au moins une action à effectuer par au moins une passerelle résidentielle du réseau.

Enfin, le dispositif de supervision 13 transmet (43) à l'entité d'exécution 14 du réseau de communication au moins une information relative à ladite au moins une action. Par exemple, le dispositif de supervision transmet à l'entité d'exécution un message de commande, et l'entité d'exécution 14 génère un message d'action à réception de ce message de commande.

### 5.2 Description d'un mode de réalisation particulier

On décrit ci-après plus en détail un exemple de mise en œuvre de l'invention pour le redémarrage d'une passerelle résidentielle CPE 111 du réseau de communication 10.

Comme indiqué précédemment, des préférences utilisateurs peuvent être configurées pour faire exécuter les actions par des passerelles résidentielles en tenant compte des contraintes et exigences des utilisateurs. Ainsi, un opérateur/fournisseur de services peut prévoir une interface de gestion (par exemple un portail de services) permettant à un utilisateur de renseigner ses préférences. L'utilisateur peut ainsi indiquer une ou des plage(s) horaires pendant lesquelles le redémarrage peut être effectué, si une action explicite est nécessaire avant de lancer le redémarrage (par exemple envoi d'un message SMS à l'utilisateur destiné à le prévenir d'un redémarrage imminent de sa passerelle, etc.). On peut ainsi améliorer la qualité de service, en évitant d'exécuter une action de type redémarrage de la passerelle alors que l'utilisateur est en train de visualiser un film par l'intermédiaire de sa passerelle, sauf en cas d'urgence (risque avéré de catastrophe naturelle, par exemple).

Ces préférences peuvent éventuellement être configurées dans la passerelle résidentielle de l'utilisateur ou pendant la souscription au service.

Optionnellement, la passerelle résidentielle peut être apte à mettre en œuvre des mécanismes avancés (par exemple, des heuristiques) pour aider à la prise de décision d'exécution d'une action.

Pour prévenir une utilisation malveillante de la procédure (par exemple, perturber une ligne), une phase d'authentification mutuelle peut être requise entre la passerelle résidentielle et l'entité d'exécution. L'utilisation de la couche liaison de données pour l'envoi des messages de contrôle constitue un premier niveau de sécurité pour les accès filaires, car seuls les équipements sur le chemin physique peuvent générer de tels messages. D'autres mécanismes d'authentification peuvent être mis en œuvre.

Selon un premier exemple, la demande de redémarrage est à l'initiative de l'entité d'exécution 14. L'entité d'exécution 14 génère alors un message d'action décrivant au moins une action à effectuer par la passerelle résidentielle.

Selon un deuxième exemple, la demande de redémarrage est à l'initiative du dispositif de supervision 13, suite à des évènements remontés au dispositif de supervision 13. Eventuellement, ces informations sont corrélées avec d'autres sources d'informations telles que les appels aux services techniques.

On rappelle que, classiquement, un ou plusieurs centres ou dispositifs de supervision (CSC) peuvent être déployés dans un réseau d'opérateur. De tels dispositifs CSC sont responsables du traitement des incidents sur les lignes de raccordement des passerelles résidentielles au réseau. Un dispositif de supervision CSC a donc accès aux informations de topologie physique et de distribution caractéristiques du réseau. L'accès à ces informations peut être direct ou passer par des plateformes de médiation. Un dispositif de supervision CSC peut être responsable de la gestion d'un groupe de lignes, de différents segments du réseau en fonction de l'organisation retenue par l'opérateur, etc. Un dispositif de supervision CSC a également accès aux informations de perturbation qui impactent le bon fonctionnement de certaines lignes d'utilisateurs. Aussi, il peut recevoir des instructions explicites pour entamer une action de redémarrage immédiat ou différé d'une passerelle résidentielle ou d'un groupe de passerelles résidentielles. Une action qui doit être menée de façon différée selon les instructions communiquées par un dispositif de supervision CSC peut donner lieu à la programmation d'une passerelle résidentielle pour un redémarrage différé ou à une programmation de l'entité d'exécution. Le redémarrage différé peut être avantageusement utilisé par un opérateur pour éviter la surcharge du réseau si le redémarrage d'un nombre important de passerelles résidentielles est nécessaire (par exemple dans le cadre de la mise à jour programmée de versions logicielles majeures impactant toutes les passerelles résidentielles d'une même région).

La décision de redémarrage d'une passerelle résidentielle peut être locale à un dispositif de supervision CSC ou externe (par exemple, décision administrative, action résultante d'un appel au service après-vente, réclamation des utilisateurs, etc.). La décision peut aussi être prise par l'entité d'exécution dans certaines conditions.

Quand une décision de redémarrage est prise par le dispositif de supervision 13, celui-ci sollicite le ou les centraux téléphoniques 12 (plus précisément les entités d'exécution 14 hébergées par ces centraux) pour les informer d'une action de gestion de redémarrage à entreprendre. Cette étape est réalisée par l'envoi d'un message de commande de type « ACTION (Type, Paramètres) », du dispositif de supervision vers l'entité d'exécution. Un ou plusieurs messages de commande ACTION() peuvent être émis.

Les arguments de la commande ACTION() indiquent en particulier :
- la nature de l'action ; et
- une liste de paramètres de configuration, ou objets (« Information Eléments (IE) », en anglais).

De tels paramètres de configuration appartiennent par exemple au groupe comprenant : un identifiant de la passerelle résidentielle (par exemple un identifiant de ligne (LINE_ID), ou un identifiant utilisateur (SUBSCRIBER_ID)), une clé de sécurité (TOKEN), un indicateur temporel d'exécution d'une action (par exemple une date de déclenchement du redémarrage (START_TIMER)), l'activation de l'envoi d'un rapport au dispositif de supervision CSC après exécution de l'action (REPORT_SET), etc.

Différentes actions peuvent être entreprises par un dispositif de supervision CSC, par exemple :
- Type=0 : déprogrammer une action de redémarrage prévue pour une passerelle résidentielle ou un groupe de passerelles résidentielles ;
- Type=1 : déclencher une action de redémarrage pour une passerelle résidentielle ou un groupe de passerelles résidentielles. Cette même action est utilisée pour mettre à jour les politiques déjà communiquées au CSC pour une passerelle résidentielle donnée (par exemple, un redémarrage différé, un redémarrage périodique, etc.). A noter que différents types peuvent être définis. Utiliser un même type ou des types distincts relève d'un choix de mise en œuvre ;
- Type=2 : Récupérer un rapport de l'action de redémarrage pour une passerelle résidentielle ou un groupe de passerelles résidentielles.

Bien entendu, d'autres actions peuvent être définies, telles que la mise à jour d'une instruction déjà communiquée à l'entité d'exécution, etc.

A réception du message de commande de type « ACTION (Type, Paramètres) », l'entité d'exécution 14 peut générer un ou plusieurs messages d'action décrivant au moins une action à effectuer par la passerelle résidentielle.

Pour ce faire, selon un exemple de mise en œuvre, l'entité d'exécution 14 met en œuvre une vérification du message de commande « ACTION (Type, Paramètres) » reçu.

Si l'entité d'exécution n'est pas compatible avec les messages de commande « ACTION() », le message de commande n'est pas pris en compte, mais l'entité d'exécution peut mémoriser la réception du message dans un fichier de suivi (log), de la même façon qu'elle pourrait mémoriser tous les événements liés à la fourniture du service.

Si l'entité d'exécution est compatible avec les messages de commande « ACTION() », mais si la fonction de redémarrage n'est pas disponible localement, elle envoie un message d'erreur au dispositif de supervision, par exemple de type ERROR(Code=UNSUPP, ...).

Si l'entité d'exécution est compatible avec les messages de commande « ACTION() », mais ne peut pas décoder le message de commande (par exemple, parce que des champs sont manquants, ou non-autorisés, ou parce qu'il y a un problème d'alignement du message, etc.), elle envoie un message d'erreur au dispositif de supervision, par exemple de type ERROR(Code=MALFORMED, ...).

Si l'entité d'exécution est compatible avec les messages de commande « ACTION() », mais pas avec le type d'action décrit dans le message de commande, elle envoie un message d'erreur au dispositif de supervision, par exemple de type ERROR(Code=UNSUPP_TYPE, ...).

Si l'entité d'exécution est compatible avec le type d'action contenu dans le message de commande « ACTION() », mais que des informations obligatoires pour ce type d'action sont manquantes, elle envoie un message d'erreur au dispositif de supervision, par exemple de type ERROR(Code=MALFORMED_TYPE, ...).

On note que d'autres informations peuvent être incluses dans le message d'erreur.

Une fois le message de commande ACTION() validé par l'entité d'exécution, l'entité d'exécution extrait le type de l'action ainsi que les paramètres de configuration associés.

Si le message de commande précise un paramètre de configuration de type indicateur temporel d'exécution immédiate de l'action (c'est-à-dire une valeur d'un paramètre START_TIMER égale à « 0 »), alors l'entité d'exécution exécute l'action immédiatement. Un message d'action est alors transmis à la passerelle résidentielle.

Sinon, si le message de commande comporte un paramètre de configuration de type indicateur temporel d'exécution différée de l'action (c'est-à-dire la valeur de START_TIMER est différente de « 0 »), l'action est programmée de préférence à l'échéance START_TIMER. En d'autres termes, l'entité d'exécution transmet à la passerelle résidentielle un message d'action de préférence à l'échéance START_TIMER. L'action peut être lancée avant l'expiration de l'échéance.

Selon un mode de réalisation particulier, préalablement à l'envoi du message d'action décrivant au moins une action à effectuer par la passerelle résidentielle, l'entité d'exécution doit vérifier la capacité de la passerelle résidentielle à exécuter l'action.

Par exemple, si l'action consiste à lancer le redémarrage d'une passerelle résidentielle, l'entité d'exécution doit identifier la passerelle résidentielle ou la ligne concernée et vérifier si la passerelle résidentielle distante supporte le mécanisme de redémarrage piloté par le réseau.

Cette information peut être configurée au préalable, découverte lors de l'attachement au réseau de la passerelle résidentielle, ou encore récupérée à la demande.

La figure 5 illustre un exemple d'échanges entre la passerelle résidentielle 111 et l'entité d'exécution 14, hébergée dans un OLT par exemple, et mettant en œuvre la découverte des capacités de la passerelle résidentielle de façon périodique ou lors de l'attachement de la passerelle au réseau. Selon cet exemple, au cours d'une étape 51, la passerelle résidentielle 111 émet au moins une fois le message d'annonce PW_REBOOT_CAP_ANNOUNCE(), soit lors de son raccordement au réseau, soit à fréquence régulière. Ce message indique si la passerelle résidentielle est compatible avec la procédure de redémarrage pilotée par le réseau. L'entité d'exécution 14 consigne l'information dans un fichier dédié. Ce fichier peut être alimenté directement par l'OLT (dans le cas d'un réseau optique) ayant reçu le message PW_REBOOT_CAP_ANNOUNCE pour d'autres entités fonctionnelles de la chaîne de distribution. On note qu'un message d'annonce peut être généré pour chaque action possible sur la passerelle résidentielle (redémarrage, extinction, mise en veille, etc.). Le message d'annonce peut également indiquer toute autre action exécutable par la passerelle résidentielle (PW_ACTION_CAP_ANNOUNCE).

La figure 6 illustre un exemple d'échanges entre la passerelle résidentielle 111 et l'entité d'exécution 14, mettant en œuvre la récupération à la demande des capacités de la passerelle résidentielle, si l'action consiste à lancer le redémarrage d'une passerelle résidentielle. Selon cet exemple, au cours d'une étape 61, l'entité d'exécution 14 émet (via un OLT dans le cas d'un réseau d'accès optique, ou via d'autres entités fonctionnelles de la chaîne de distribution) un message de découverte PW_REBOOT_CAP_DISCOVER, destiné à une passerelle résidentielle ou à un groupe de passerelles résidentielles.

Un tel message de découverte de type PW_REBOOT_CAP_DISCOVER est donc envoyé par une entité d'exécution pour demander à une passerelle résidentielle si elle est compatible avec la procédure de redémarrage pilotée par le réseau. D'autres informations concernant les capacités fonctionnelles d'une passerelle peuvent également être demandées via ce message.

A réception du message de découverte, la passerelle résidentielle 111 répond avec un message d'annonce PW_REBOOT_CAP_ANNOUNCE si elle est compatible avec la procédure de redémarrage pilotée par le réseau ; sinon le message n'est pas pris en compte par la passerelle résidentielle. Les messages PW_REBOOT_CAP_DISCOVER et PW_REBOOT_CAP_ANNOUNCE peuvent être envoyés plusieurs fois pour éviter la perte de ces messages. A nouveau, de tels messages peuvent être envoyés pour vérifier la capacité des passerelles résidentielles à exécuter différentes actions (redémarrage, extinction, mise en veille, etc.), en utilisant des messages de type PW_ACTION_CAP_DISCOVER et PW_ACTION_CAP_ANNOUNCE.

Le message de découverte, plus généralement de type PW_ACTION_CAP_DISCOVER, est donc envoyé par une entité d'exécution pour demander à une passerelle résidentielle si elle est capable d'exécuter une action pilotée par le réseau. D'autres informations concernant les capacités fonctionnelles d'une passerelle résidentielle peuvent également être demandées via ce message.

Le message d'annonce, plus généralement de type PW_ACTION_CAP_ANNOUNCE, est envoyé à l'entité d'exécution par la passerelle résidentielle, soit en réponse à un message de découverte de type PW_REBOOT_CAP_DISCOVER (demande explicite), soit d'une manière non sollicitée, par exemple à chaque synchronisation réseau ou à intervalles réguliers.

Si la passerelle résidentielle 111 est compatible avec la ou les actions requises par le réseau, alors l'entité d'exécution 14 envoie le message d'action décrivant la ou les actions à effectuer par la passerelle résidentielle. Par exemple, comme illustré en figures 5 et 6, l'entité d'exécution 14 génère un message d'action PW_REBOOT_ACTION pour demander à la passerelle résidentielle 111 d'exécuter un redémarrage.

Ce message d'action, plus généralement de type PW_ACTION_ACTION, peut être envoyé par l'entité d'exécution à la passerelle résidentielle pour lui demander d'engager une action.

A réception de ce message d'action, la passerelle résidentielle 111 peut accuser réception du message d'action, en renvoyant un message d'acquittement PW_REBOOT_ACK à destination de l'entité d'exécution.

Un tel message d'acquittement, plus généralement de type PW_ACTION_ACK, peut être envoyé par une passerelle résidentielle en réponse à un message reçu du réseau pour accuser la réception d'une instruction, et l'informer que toutes les actions associées ont été réalisées avec succès.

On note que, selon une variante de réalisation, l'entité d'exécution réémet le message d'action PW_REBOOT_ACTION tant qu'une condition d'arrêt n'est pas remplie. Par exemple, l'entité d'exécution réémet le message d'action jusqu'à réception d'un message d'acquittement (PW_REBOOT_ACK) de la part de la passerelle résidentielle, ou jusqu'à l'expiration d'un minuteur de retransmission dédié, ou jusqu'à ce qu'un nombre maximum de messages PW_REBOOT_ACTION a été transmis, ou si la ligne est inactive, etc.

Selon une autre variante, il est possible de conditionner l'action de redémarrage à une autorisation préalable de l'utilisateur.

Une fois le message d'action reçu, l'action peut être exécutée par la ou les passerelle(s) résidentielle(s) de façon immédiate ou différée.

Pour ce faire, le message d'action peut comporter au moins un paramètre de configuration, par exemple un indicateur temporel d'exécution de l'action. Ainsi, si l'action consiste à lancer le redémarrage d'une passerelle résidentielle, le message d'action PW_REBOOT_ACTION() peut comporter un paramètre « Schedule ». Si la valeur de ce paramètre est positionnée à « 0 » (Schedule=0), alors le redémarrage doit être immédiat (de préférence après l'envoi du message PW_REBOOT_ACK). Si la valeur de ce paramètre est positionnée à une valeur non nulle (Schedule=T), alors le redémarrage doit être programmé à l'échéance « Schedule=T ».

L'envoi du message d'acquittement PW_REBOOT_ACK est une confirmation envoyée par la passerelle au réseau selon laquelle l'action de redémarrage a été programmée avec succès.

Si la passerelle résidentielle 111 ne peut pas exécuter l'action de redémarrage demandée par le réseau, elle envoie un message d'échec pour en informer le réseau. Par exemple, un tel message d'échec PW_REBOOT_NACK sera envoyé par la passerelle résidentielle 111 si elle ne comporte pas de fonction dédiée pour procéder au redémarrage (par exemple une fonction « crond »), ou si l'exécution de la commande de programmation a échoué, etc.

Un tel message d'échec, plus généralement de type PW_ACTION_NACK, peut être envoyé par une passerelle résidentielle en réponse à un message reçu du réseau, pour informer l'entité d'exécution dont dépend la passerelle résidentielle pour exécuter les actions qu'une erreur a été rencontrée lors du traitement d'une action demandée par l'entité d'exécution.

On note par ailleurs que, si la passerelle résidentielle 111 ne dispose pas de connectivité IP, et qu'une action de redémarrage différée est demandée, le service souscrit par l'utilisateur n'est pas accessible tant que l'action de redémarrage n'a pas été effectuée.

L'invention propose, selon au moins un mode de réalisation, d'offrir une continuité de service en cas de redémarrage différé notamment.

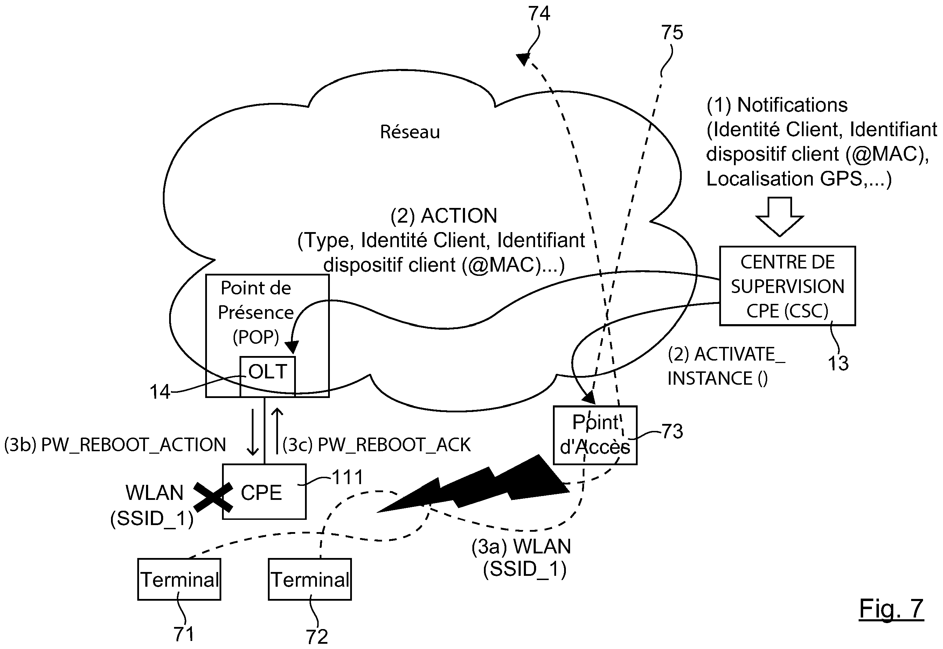

Comme illustré en figure 7, un utilisateur dispose par exemple de deux terminaux 71 et 72. Il souhaite accéder au réseau Internet depuis au moins l'un de ses terminaux. Or on considère que sa passerelle résidentielle CPE 111 est indisponible ou sera prochainement indisponible, par exemple en attente d'un redémarrage. De ce fait, les terminaux 71 et 72 ne peuvent pas accéder à Internet par l'intermédiaire de la passerelle résidentielle CPE 111.

Afin de garantir à l'utilisateur une continuité de service dans ce cas, le dispositif de supervision des CPE 13 peut obtenir de la passerelle résidentielle CPE 111 un contexte de configuration du réseau local associé à cette passerelle résidentielle, puis dupliquer et activer ce contexte de configuration dans un point d'accès de secours 73.

Le contexte de configuration du réseau local comprend notamment la configuration du réseau local sans-fil WLAN (Wireless LAN). Comme illustré en figure 7, on duplique ainsi l'identifiant WLAN SSID_1 de la passerelle résidentielle CPE 111 dans le point d'accès de secours 73, et éventuellement les règles utilisateurs (par exemple, la liste des adresse MAC en cas d'application de filtrage MAC, les entrées NAT statiques, les règles de filtrage, etc.).

Ce contexte de configuration réseau de la passerelle résidentielle peut être récupéré au démarrage de la passerelle résidentielle ou à la demande. De préférence, la récupération du contexte réseau doit avoir lieu au préalable (c'est-à-dire pendant le fonctionnement nominal d'une passerelle). Ce contexte peut être mis à jour à l'initiative de la passerelle, de l'utilisateur ou de l'opérateur. La récupération du contexte ne suppose ni n'exclut l'observation d'un incident. On note que l'accès à ces informations doit satisfaire aux exigences réglementaires pour le respect de la vie privée. Par exemple, l'accès à ces informations pour des besoins de continuité de service exclusivement peut être inscrit dans un contrat, une autorisation au préalable de l'utilisateur peut être requise, etc. Les modalités d'accès et de respect de la confidentialité de ces informations doivent aussi être clairement indiquées aux utilisateurs.

Avant de lancer une action de redémarrage de la passerelle résidentielle 111, le dispositif de supervision 13 doit disposer des contextes de configuration réseau. Afin d'assurer une continuité de service, le dispositif de supervision 13 doit activer les contextes de configuration réseau dans un point d'accès 73 à proximité (par exemple CPE voisin, point d'accès Hot spot WLAN, etc.), en lui adressant un message de type ACTIVATE_INSTANCE.

Une fois le point d'accès 73 prêt à annoncer le même identifiant SSID que celui correspondant à la passerelle résidentielle faisant l'objet d'une procédure de redémarrage (par exemple SSID_1), la procédure de redémarrage peut être lancée à l'aide du message d'action PW_REBOOT_START (transmis de l'entité d'exécution vers la passerelle résidentielle 111) et du message d'acquittement PW_REBOOT_ACK.

Les lignes 74 et 75 en pointillés matérialisent l'échange de trafic entre les terminaux 71 et 72 et des machines distantes, via un point d'accès de secours 73 WLAN dans le contexte de continuité de service. Selon cette technique, un terminal peut donc basculer vers un point d'accès de secours quand sa passerelle résidentielle de raccordement devient indisponible.

On note que, avantageusement, les mêmes clés de sécurité sont utilisées pour l'association WLAN avec le point d'accès de secours.

Selon une variante d'implémentation de cette technique, un équipement dédié à la continuité de service est introduit dans le réseau local de l'utilisateur. Une telle variante peut notamment être mise en œuvre si la récupération des contextes de configuration réseau n'est pas conforme aux contraintes réglementaires, ou si elle ne convient pas à un opérateur (elle est par exemple incomplète ou non fiable), ou si elle n'est pas autorisée par un utilisateur, etc.

Un tel équipement dédié, tel un terminal ou une passerelle résidentielle interne (CPE interne), permet de fournir une connectivité locale entre les équipements du réseau local. On garantit ainsi des services de connectivité, comme un accès aux imprimantes, des échanges de données entre terminaux, etc.

Cette variante offre un niveau de sécurité plus élevé, car la passerelle résidentielle interne peut embarquer des fonctions pour authentifier un point d'accès externe. Ainsi, les risques d'interception du trafic par un point d'accès malveillant sont minimisés.

En particulier, on note que les fonctions de la passerelle résidentielle et de la passerelle résidentielle interne peuvent être embarquées dans un même équipement physique. Toutefois, la gestion de l'alimentation et la gestion logicielle (mise à jour, par exemple), en particulier, doivent être séparées.

On a décrit précédemment un exemple de mise en œuvre de l'invention pour l'exécution d'une action de type redémarrage (immédiat ou différé) d'une ou plusieurs passerelles résidentielles.

On décrit ci-après d'autres exemples de mises en œuvre de l'invention, pouvant être mis en œuvre suite à une action de redémarrage ou indépendamment.

Par exemple, l'action peut être de type « annulation d'une action ».

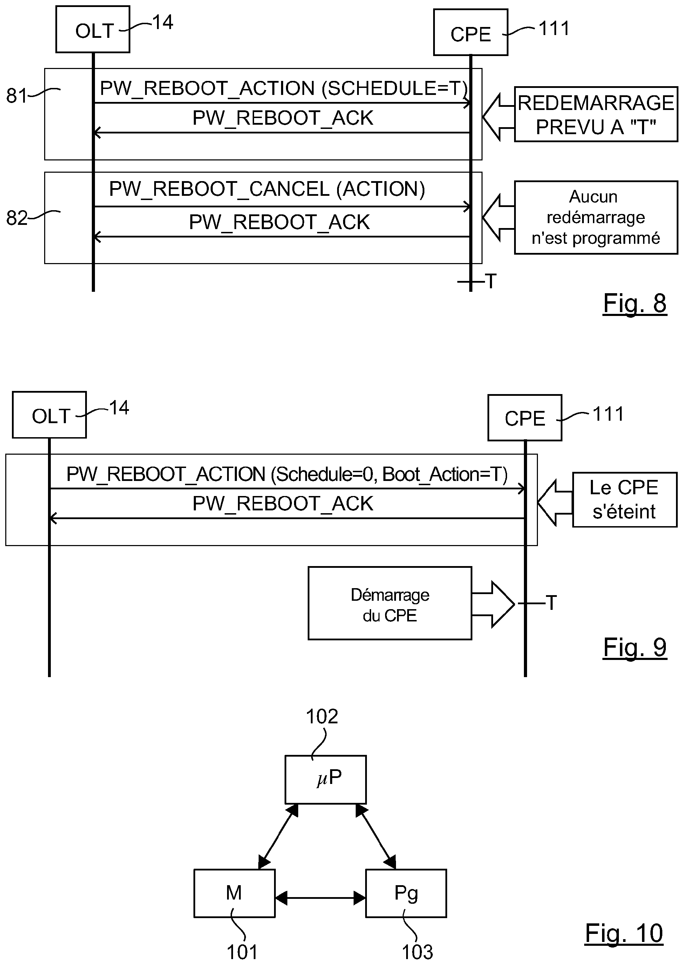

Comme illustré en figure 8, on considère à titre d'exemple que l'entité d'exécution 14 a programmé 81 un cycle de redémarrage, en transmettant un message d'action de type PW_REBOOT_ACTION(Schedule=T) à la passerelle résidentielle 111. La passerelle résidentielle 111 a accusé réception par l'envoi d'un message d'acquittement PW_REBOOT_ACK.

Si cette action de redémarrage ne doit pas être effectuée, l'entité d'exécution 14 peut supprimer (82) ce cycle de redémarrage, en transmettant un message d'annulation PW_REBOOT_CANCEL pour informer la passerelle résidentielle 111 que l'action de redémarrage doit être annulée.

On note que le message d'annulation PW_REBOOT_CANCEL peut porter un paramètre permettant d'identifier l'action à supprimer (copie de l'action à supprimer, identifiant de l'action à supprimer, etc.)

Le message d'annulation PW_REBOOT_CANCEL peut également être envoyé sans argument. Dans ce cas, toutes les actions de redémarrage différé connues de la passerelle résidentielle 111 doivent être annulées.

Un message d'acquittement PW_REBOOT_ACK peut ensuite être envoyé par la passerelle résidentielle, pour informer le réseau qu'elle a annulé avec succès les actions de redémarrage programmé.

Bien entendu, tout type d'action programmée à l'avance peut être supprimé en utilisant un message de type PW_ACTION_CANCEL. Ainsi, un tel message d'annulation de type PW_ACTION_CANCEL peut être envoyé par l'entité d'exécution pour annuler une action programmée.

L'entité d'exécution peut également informer une ou plusieurs passerelles résidentielles d'une série d'actions à effectuer.

Par exemple, si un segment réseau doit être isolé en cas de catastrophe naturelle, d'orages violents, de problèmes réseau, etc., le réseau peut transmettre une instruction d'extinction à une ou plusieurs passerelles résidentielles, ainsi qu'une instruction de redémarrage programmé, dont l'exécution ne devra avoir lieu qu'à une échéance donnée (par exemple, à l'issue de travaux de maintenance programmée dans le réseau).

Pour ce faire, un paramètre « Boot_Action » du message d'action PW_REBOOT_ACTION peut être utilisé pour notifier la ou les passerelles résidentielles de l'action à entreprendre.

Par exemple, si le paramètre « Boot_Action » est positionné à « 0 », alors la passerelle résidentielle redémarre immédiatement. Si le paramètre « Boot_Action » est différent de « 0», alors la passerelle résidentielle doit d'abord s'éteindre puis redémarrer à l'échéance indiquée par ce paramètre. Ce paramètre peut être inclus dans un message PW_REBOOT_ACTION() indépendamment de la valeur du paramètre « Schedule ».

La figure 9 illustre un exemple d'extinction / redémarrage d'une passerelle résidentielle 111 par une entité d'exécution 14. Selon cet exemple, l'entité d'exécution 14 envoie un message d'action de type PW_REBOOT_ACTION (Schedule=0, Boot_Action=T) à la passerelle résidentielle 111. La passerelle résidentielle envoie un message d'acquittement PW_REBOOT_ACK, puis s'éteint. La passerelle résidentielle redémarre automatiquement à l'échéance T.

### 5.3 Variantes

On note que selon l'invention, les passerelles résidentielles peuvent embarquer des fonctions de type L2 (par exemple, fonctions de traitement de paquets Ethernet) et/ou de type L3 (par exemple, fonctions d'acheminement et de routage de trafic IP, fonctions de traduction d'adressage IP). Certaines fonctions de la passerelle résidentielle peuvent donc être réparties/déportées dans le réseau.

Selon un premier exemple, la passerelle embarque des fonctions L3.

Selon un deuxième exemple, la passerelle n'embarque que des fonctions L2, mais comprend en outre des fonctions L3 déportées dans le réseau. La passerelle se comporte alors comme un commutateur (ou « switch » en anglais). Ces fonctions L3 ainsi virtualisées peuvent être hébergées au sein d'une infrastructure de type « cloud », exploitée par l'opérateur par exemple. Les solutions proposées dans la présente invention peuvent dans ce cas être mises à profit par un utilisateur pour intervenir depuis son domicile sur de telles fonctions virtualisées. Dans cette variante, la fonction « entité d'exécution » (hébergée (à titre d'exemple) dans un « central téléphonique » dans les modes de réalisation décrits précédemment) est ici hébergée au sein du réseau domestique, au moyen, par exemple, d'une application installée sur un équipement du réseau local (mobile, ordinateur, ...).

La solution proposée et détaillée précédemment dans le mode de réalisation particulier s'applique aussi à la passerelle quand celle-ci ne comprend que des fonctions L2. Dans ce cas, la passerelle est contrôlée depuis le réseau de l'opérateur selon les mêmes modalités décrites précédemment.

De façon similaire, la solution proposée peut être mise en œuvre pour contrôler un autre équipement du réseau connecté à la passerelle résidentielle. Par exemple, la passerelle résidentielle peut agir comme une entité d'exécution pour procéder au redémarrage d'un boîtier décodeur (en anglais « Set top box ») permettant d'accéder à la télévision numérique. La passerelle résidentielle peut ainsi relayer des instructions reçues du réseau pour la gestion du redémarrage du boîtier décodeur connecté à la passerelle résidentielle.

### 5.4 Structure simplifiée de l'entité d'exécution

On présente finalement, en relation avec la figure 10, la structure simplifiée d'une entité d'exécution mettant en œuvre un procédé de contrôle de passerelles résidentielles selon l'un des modes de réalisation décrits ci-dessus.

On note qu'une structure similaire pourrait être envisagée pour une passerelle résidentielle et pour un dispositif de supervision.

Comme illustré en figure 10, une entité d'exécution selon un mode de réalisation de l'invention comprend une mémoire 101, comprenant par exemple une mémoire tampon, une unité de traitement 102, équipée par exemple d'un processeur **µ**P, et pilotée par le programme d'ordinateur Pg 103, mettant en œuvre le procédé de contrôle de passerelles résidentielles décrit ci-dessus.

A l'initialisation, les instructions de code du programme d'ordinateur 103 sont par exemple chargées dans une mémoire RAM avant d'être exécutées par le processeur de l'unité de traitement 102. Le microprocesseur de l'unité de traitement 102 met en œuvre les étapes du procédé de contrôle de passerelles résidentielles décrit précédemment, selon les instructions du programme d'ordinateur 103, pour générer un message d'action comportant au moins une action à effectuer par la passerelle résidentielle, et transmettre ce message d'action à la passerelle via la couche liaison de données.

Pour cela, l'entité d'exécution comprend, outre la mémoire tampon 101, des moyens de génération et de transmission d'un message d'action (par exemple un émetteur).

Ces moyens sont pilotés par le microprocesseur de l'unité de traitement 102.

## Revendications

1. Procédé de redémarrage d'une passerelle résidentielle (111, 112, 11n) connectée d'une part à un réseau de communication étendu et d'autre part à un réseau local, dans lequel ladite passerelle met en œuvre les étapes suivantes :
- réception d'un premier message d'action comprenant au moins une action d'extinction de ladite passerelle à exécuter et un indicateur temporel d'échéance d'exécution de l'action d'extinction, ledit premier message d'action étant généré par une entité d'exécution du réseau de communication étendu et transmis au niveau de la couche liaison de données, sur détection d'un incident ou d'un dysfonctionnement,
- stockage d'un contexte de configuration du réseau local associé à ladite passerelle,
- extinction de ladite passerelle à l'échéance indiquée par l'indicateur temporel d'échéance d'exécution de l'action d'extinction, et
- redémarrage de ladite passerelle à une échéance indiquée par un indicateur temporel d'échéance d'exécution d'une action de redémarrage selon ledit contexte de configuration préalablement stocké, ladite action de redémarrage de ladite passerelle et ledit indicateur temporel d'exécution de l'action de redémarrage étant compris dans ledit premier message d'action ou dans un deuxième message d'action généré par ladite entité d'exécution et transmis au niveau de la couche liaison de données.

2. Procédé de redémarrage selon la revendication 1, **caractérisé en ce que** ladite passerelle met également en œuvre la transmission, à ladite entité d'exécution ou à un dispositif de supervision du réseau de communication étendu, dudit contexte de configuration du réseau local.

3. Procédé de redémarrage selon l'une quelconque des revendications 1 à 2, **caractérisé en ce que** ladite passerelle met en outre en œuvre la transmission, à ladite entité d'exécution, d'un message d'annonce (PW_REBOOT_CAP_ANNOUNCE) indiquant la ou les actions pouvant être exécutée(s) par ladite passerelle, ledit message d'annonce étant transmis lors du rattachement de la passerelle au réseau de communication étendu, et/ou périodiquement, et/ou en réponse à un message de découverte (PW_REBOOT_CAP_DISCOVER) transmis par l'entité d'exécution.

4. Procédé de redémarrage selon l'une quelconque des revendications 1 à 3, caractérisé en en ce que ladite passerelle met en outre en œuvre un enregistrement d'informations de configuration de ladite passerelle, et une transmission desdites informations de configuration à ladite entité d'exécution ou à un dispositif de supervision du réseau de communication étendu.

5. Procédé de contrôle du redémarrage d'une passerelle résidentielle connectée d'une part à un réseau de communication étendu et d'autre part à un réseau local, mis en œuvre dans une entité d'exécution du réseau de communication étendu, dans lequel ladite entité d'exécution met en œuvre les étapes suivantes :
- génération d'un premier message d'action comprenant au moins une action d'extinction de ladite passerelle à exécuter et un indicateur temporel d'échéance d'exécution de l'action d'extinction, ledit premier message d'action étant généré sur détection d'un incident ou d'un dysfonctionnement ;
- transmission dudit premier message d'action à ladite passerelle, ledit premier message d'action étant transmis au niveau de la couche liaison de données, et
- transmission d'une action de redémarrage de la passerelle à exécuter et d'un indicateur temporel d'échéance d'exécution de l'action de redémarrage dans ledit premier message d'action ou dans un deuxième message d'action généré par ladite entité d'exécution et transmis au niveau de la couche liaison de données.

6. Procédé de contrôle selon la revendication 5, **caractérisé en ce que** ladite étape de génération d'un premier message d'action met en œuvre les sous-étapes suivantes :
- réception d'au moins un message de commande (ACTION (Type, Paramètres)) en provenance d'un dispositif de supervision du réseau de communication étendu, comprenant l'action d'extinction de ladite passerelle à exécuter, l'action de redémarrage de ladite passerelle à exécuter, au moins l'indicateur temporel d'échéance d'exécution de l'action d'extinction et l'indicateur temporel d'échéance d'exécution de l'action de redémarrage de ladite passerelle, et
- génération dudit premier message d'action, en tenant compte au moins de l'action d'extinction, de l'indicateur temporel d'échéance d'exécution de l'action d'extinction et éventuellement du deuxième message d'action en tenant compte de l'action de redémarrage de ladite passerelle à exécuter et de l'indicateur temporel d'échéance d'exécution de l'action de redémarrage.

7. Procédé de contrôle selon la revendication 6, **caractérisé en ce que** ledit au moins un message de commande comprend un paramètre de configuration appartenant au groupe comprenant :
- un identifiant de la passerelle,
- une clé de sécurité,
- l'indicateur temporel d'exécution de l'action d'extinction,
- l'indicateur temporel d'exécution de l'action de redémarrage, et
- une activation d'envoi d'un rapport au dispositif de supervision après exécution de l'action d'extinction et/ou de redémarrage.

8. Procédé de contrôle selon l'une quelconque des revendications 5 à 7, **caractérisé en ce que** ladite entité d'exécution met en œuvre une étape préalable de vérification de la capacité de la passerelle à exécuter une action ordonnée par l'entité d'exécution, ladite étape de vérification comprenant la transmission d'un message de découverte (PW_REBOOT_CAP_DISCOVER) interrogeant ladite passerelle sur ses capacités, et la réception d'un message d'annonce (PW_REBOOT_CAP_ANNOUNCE) indiquant la ou les actions pouvant être exécutées par ladite passerelle.

9. Procédé de supervision du redémarrage d'une passerelle résidentielle (111, 112, 11n) connectée d'une part à un réseau de communication étendu et d'autre part à un réseau local, dans lequel un dispositif de supervision dudit réseau de communication étendu met en œuvre les étapes suivantes :
- obtention d'informations relatives à la passerelle, relatives à un incident ou un dysfonctionnement ;
- décision d'une action d'extinction et d'une action de redémarrage de ladite passerelle, et
- transmission, à une entité d'exécution du réseau de communication étendu, dans au moins un message de commande (ACTION (Type, Paramètres)) comprenant une action d'extinction de ladite passerelle, une action de redémarrage de ladite passerelle, un indicateur temporel d'échéance d'exécution de l'action d'extinction et un indicateur temporel d'échéance d'exécution de l'action de redémarrage.

10. Procédé de supervision selon la revendication 9, **caractérisé en ce que** ledit dispositif de supervision met en œuvre les étapes suivantes, préalablement à l'extinction de ladite passerelle :
- réception d'un contexte de configuration du réseau local associé à ladite passerelle, et
- duplication et activation dudit contexte de configuration dans un point d'accès de secours.

11. Procédé de supervision selon la revendication 10, **caractérisé en ce qu'**un équipement du réseau local utilise l'identifiant de ladite passerelle dans le réseau local pour se raccorder au réseau de communication étendu via ledit point d'accès de secours.

12. Passerelle résidentielle (111, 112, 11n), connectée d'une part à un réseau de communication étendu et d'autre part à un réseau local, ladite passerelle comprenant un processeur couplé de manière opérationnelle à une mémoire, et configuré pour :
- recevoir un premier message d'action comprenant au moins une action d'extinction de ladite passerelle à exécuter, d'un indicateur temporel d'échéance d'exécution de l'action d'extinction, ledit premier message d'action étant généré par une entité d'exécution du réseau de communication étendu et transmis au niveau de la couche liaison de données,
- stocker, dans ladite mémoire, un contexte de configuration du réseau local associé à ladite passerelle,
- éteindre la passerelle à l'échéance indiquée par l'indicateur temporel d'échéance d'exécution de l'action d'extinction, et
- redémarrer ladite passerelle à une échéance indiquée par un indicateur temporel d'échéance d'exécution d'une action de redémarrage selon ledit contexte de configuration préalablement stocké, ladite action de redémarrage de ladite passerelle et ledit indicateur temporel d'exécution de l'action de redémarrage ayant été transmis dans ledit premier message d'action ou dans un deuxième message d'action généré par ladite entité d'exécution et transmis au niveau de la couche liaison de données.

13. Entité d'exécution (14) d'un réseau de communication étendu configurée pour contrôler le redémarrage d'une passerelle résidentielle connectée d'une part au réseau de communication étendu et d'autre part à un réseau local, ladite entité d'exécution comprenant un processeur couplé de manière opérationnelle à une mémoire, et configuré pour :
- générer, sur détection d'un incident ou d'un dysfonctionnement, un premier message d'action comprenant au moins une action d'extinction de ladite passerelle à exécuter et un indicateur temporel d'échéance d'exécution de l'action d'extinction,
- transmettre ledit premier message d'action à ladite passerelle, ledit premier message d'action étant transmis au niveau de la couche liaison de données, et
- transmettre une action de redémarrage de la passerelle à exécuter et un indicateur temporel d'échéance d'exécution de l'action de redémarrage dans le premier message d'action ou dans un deuxième message d'action généré par ladite entité d'exécution et transmis au niveau de la couche liaison de données.

14. Dispositif de supervision (13) d'un réseau de communication étendu configuré pour superviser le redémarrage d'une passerelle résidentielle connectée d'une part au réseau de communication étendu et d'autre part à un réseau local, ledit dispositif de supervision comprenant un processeur couplé de manière opérationnelle à une mémoire, et configuré pour :
- obtenir des informations relatives à la passerelle, relatives à un incident ou un dysfonctionnement,
- prendre une décision d'extinction de ladite passerelle, et
- transmettre, à une entité d'exécution du réseau de communication étendu, au moins un message de commande (ACTION (Type, Paramètres)) comprenant une action d'extinction de ladite passerelle à exécuter, un indicateur temporel d'échéance d'exécution de l'action d'extinction, une action de redémarrage de ladite passerelle, et un indicateur temporel d'échéance d'exécution de l'action de redémarrage.

15. Programme d'ordinateur comportant des instructions pour la mise en œuvre de toutes les étapes d'un procédé selon l'une quelconque des revendications 1 à 11 lorsque ce programme est exécuté par un processeur.

## Patentansprüche

1. Verfahren zum Neustart eines Residential Gateways (111, 112, 11n), das einerseits mit einem Fernkommunikationsnetz und andererseits mit einem lokalen Netz verbunden ist, wobei das Gateway die folgenden Schritte durchführt:
- Empfang einer ersten Aktionsnachricht, die mindestens eine auszuführende Herunterfahraktion des Gateways und eine Zeitanzeige der Ausführungsfälligkeit der Herunterfahraktion enthält, wobei die erste Aktionsnachricht von einer Ausführungsentität des Fernkommunikationsnetzes generiert und bei Erfassung eines Zwischenfalls oder einer Funktionsstörung in der Datenverbindungsschicht übertragen wird,
- Speichern eines Konfigurationskontexts des dem Gateway zugeordneten lokalen Netzes,
- Herunterfahren des Gateways bei der durch die Ausführungsfälligkeit-Zeitanzeige der Herunterfahraktion angezeigten Fälligkeit, und
- Neustart des Gateways bei einer durch eine Ausführungsfälligkeit-Zeitanzeige einer Neustartaktion gemäß dem vorher gespeicherten Konfigurationskontext angezeigten Fälligkeit, wobei die Neustartaktion des Gateways und die Zeitanzeige der Ausführung der Neustartaktion in der ersten Aktionsnachricht oder in einer zweiten Aktionsnachricht enthalten sind, die von der Ausführungsentität generiert und in der Datenverbindungsschicht übertragen wird.

2. Neustartverfahren nach Anspruch 1, **dadurch gekennzeichnet, dass** das Gateway ebenfalls die Übertragung des Konfigurationskontexts des lokalen Netzes an die Ausführungsentität oder an eine Überwachungsvorrichtung des Fernkommunikationsnetzes durchführt.

3. Neustartverfahren nach einem der Ansprüche 1 bis 2, **dadurch gekennzeichnet, dass** das Gateway außerdem die Übertragung einer Ankündigungsnachricht (PW_REBOOT_CAP_ANNOUNCE) an die Ausführungsentität durchführt, die die Aktion(en) anzeigt, die vom Gateway ausgeführt werden kann(können), wobei die Ankündigungsnachricht beim Anschluss des Gateways an das Fernkommunikationsnetz und/oder periodisch und/oder als Antwort auf eine von der Ausführungsentität übertragene Discovery-Nachricht (PW_REBOOT_CAP_DISCOVER) übertragen wird.

4. Neustartverfahren nach einem der Ansprüche 1 bis 3, **dadurch gekennzeichnet, dass** das Gateway außerdem eine Speicherung von Konfigurationsinformationen des Gateways und eine Übertragung der Konfigurationsinformationen an die Ausführungsentität oder an eine Überwachungsvorrichtung des Fernkommunikationsnetzes durchführt.

5. Verfahren zur Kontrolle des Neustarts eines Residential Gateways, das einerseits mit einem Fernkommunikationsnetz und andererseits mit einem lokalen Netz verbunden ist, durchgeführt in einer Ausführungsentität des Fernkommunikationsnetzes, wobei die Ausführungsentität die folgenden Schritte durchführt:
- Generierung einer ersten Aktionsnachricht, die mindestens eine auszuführende Herunterfahraktion des Gateways und eine Zeitanzeige der Ausführungsfälligkeit der Herunterfahraktion enthält, wobei die erste Aktionsnachricht bei Erfassung eines Zwischenfalls oder einer Funktionsstörung generiert wird;
- Übertragung der ersten Aktionsnachricht an das Gateway, wobei die erste Aktionsnachricht in der Datenverbindungsschicht übertragen wird, und
- Übertragung einer auszuführenden Neustartaktion des Gateways und einer Zeitanzeige der Ausführungsfälligkeit der Neustartaktion in der ersten Aktionsnachricht oder in einer zweiten Aktionsnachricht, die von der Ausführungsentität generiert und in der Datenverbindungsschicht übertragen wird.

6. Kontrollverfahren nach Anspruch 5, **dadurch gekennzeichnet, dass** der Schritt der Generierung einer ersten Aktionsnachricht die folgenden Teilschritte durchführt:
- Empfang mindestens einer Steuernachricht (ACTION (Typ, Parameter)) von einer Überwachungsvorrichtung des Fernkommunikationsnetzes, die die auszuführende Herunterfahraktion des Gateways, die auszuführende Neustartaktion des Gateways, mindestens die Zeitanzeige der Ausführungsfälligkeit der Herunterfahraktion und die Zeitanzeige der Ausführungsfälligkeit der Neustartaktion des Gateways enthält, und
- Generierung der ersten Aktionsnachricht unter Berücksichtigung mindestens der Herunterfahraktion, der Zeitanzeige der Ausführungsfälligkeit der Herunterfahraktion, und ggf. der zweiten Aktionsnachricht unter Berücksichtigung der auszuführenden Neustartaktion des Gateways und der Zeitanzeige der Ausführungsfälligkeit der Neustartaktion.

7. Kontrollverfahren nach Anspruch 6, **dadurch gekennzeichnet, dass** die mindestens eine Steuernachricht einen Konfigurationsparameter enthält, der zu der Gruppe gehört, die enthält:
- eine Kennung des Gateways,
- einen Sicherheitsschlüssel,
- die Zeitanzeige der Ausführung der Herunterfahraktion,
- die Zeitanzeige der Ausführung der Neustartaktion, und
- eine Aktivierung des Sendens eines Berichts an die Überwachungsvorrichtung nach Ausführung der Herunterfahr- und/oder Neustartaktion.

8. Kontrollverfahren nach einem der Ansprüche 5 bis 7, **dadurch gekennzeichnet, dass** die Ausführungsentität einen vorhergehenden Schritt der Überprüfung der Fähigkeit des Gateways zur Ausführung einer von der Ausführungsentität angeordneten Aktion enthält, wobei der Überprüfungsschritt die Übertragung einer Discovery-Nachricht (PW_REBOOT_CAP_DISCOVER), die das Gateway über seine Fähigkeiten befragt, und den Empfang einer Ankündigungsnachricht (PW_REBOOT_CAP_ANNOUNCE) enthält, die die Aktion(en) anzeigt, die vom Gateway ausgeführt werden kann(können).

9. Überwachungsverfahren des Neustarts eines Residential Gateways (111, 112, 11n), das einerseits mit einem Fernkommunikationsnetz und andererseits mit einem lokalen Netz verbunden ist, wobei eine Überwachungsvorrichtung des Fernkommunikationsnetzes die folgenden Schritte durchführt:
- Erhalt von Informationen bezüglich des Gateways, bezüglich eines Zwischenfalls oder einer Funktionsstörung;
- Entscheidung einer Herunterfahraktion und einer Neustartaktion des Gateways, und
- Übertragung, an eine Ausführungsentität des Fernkommunikationsnetzes, mindestens einer Steuernachricht (ACTION (Typ, Parameter)), die eine Herunterfahraktion des Gateways, eine Neustartaktion des Gateways, eine Zeitanzeige der Ausführungsfälligkeit der Herunterfahraktion und eine Zeitanzeige der Ausführungsfälligkeit der Neustartaktion enthält.

10. Überwachungsverfahren nach Anspruch 9, **dadurch gekennzeichnet, dass** die Überwachungsvorrichtung vor dem Herunterfahren des Gateways die folgenden Schritte durchführt:
- Empfang eines Konfigurationskontexts des dem Gateway zugeordneten lokalen Netzes, und
- Duplizierung und Aktivierung des Konfigurationskontexts in einem Notzugriffspunkt.

11. Überwachungsverfahren nach Anspruch 10, **dadurch gekennzeichnet, dass** eine Ausrüstung des lokalen Netzes die Kennung des Gateways im lokalen Netz nutzt, um sich über den Notzugriffspunkt an das Fernkommunikationsnetz anzuschließen.

12. Residential Gateway (111, 112, 11n), das einerseits mit einem Fernkommunikationsnetz und andererseits mit einem lokalen Netz verbunden ist, wobei das Gateway einen Prozessor enthält, der operativ mit einem Speicher gekoppelt und konfiguriert ist, um:
- eine erste Aktionsnachricht zu empfangen, die mindestens eine auszuführende Herunterfahraktion des Gateways und eine Zeitanzeige der Ausführungsfälligkeit der Herunterfahraktion enthält, wobei die erste Aktionsnachricht von einer Ausführungsentität des Fernkommunikationsnetzes generiert und in der Datenverbindungsschicht übertragen wird,
- im Speicher einen Konfigurationskontext des dem Gateway zugeordneten lokalen Netzes zu speichern,
- das Gateway bei der durch die Zeitanzeige der Ausführungsfälligkeit der Herunterfahraktion angezeigten Fälligkeit herunterzufahren, und
- das Gateway bei einer von einer Zeitanzeige der Ausführungsfälligkeit einer Neustartaktion gemäß dem vorher gespeicherten Konfigurationskontext angezeigten Fälligkeit neu zu starten, wobei die Neustartaktion des Gateways und die Zeitanzeige der Ausführung der Neustartaktion in der ersten Aktionsnachricht oder in einer zweiten Aktionsnachricht übertragen wurden, die von der Ausführungsentität generiert und in der Datenverbindungsschicht übertragen wird.

13. Ausführungsentität (14) eines Fernkommunikationsnetzes, die konfiguriert ist, den Neustart eines Residential Gateways zu kontrollieren, das einerseits mit dem Fernkommunikationsnetz und andererseits mit einem lokalen Netz verbunden ist, wobei die Ausführungsentität einen Prozessor enthält, der operativ mit einem Speicher gekoppelt und konfiguriert ist, um:
- bei Erfassung eines Zwischenfalls oder einer Funktionsstörung eine erste Aktionsnachricht zu generieren, die mindestens eine auszuführende Herunterfahraktion des Gateways und eine Zeitanzeige der Ausführungsfälligkeit der Herunterfahraktion enthält,
- die erste Aktionsnachricht an das Gateway zu übertragen, wobei die erste Aktionsnachricht in der Datenverbindungsschicht übertragen wird, und
- eine auszuführende Neustartaktion des Gateways und eine Zeitanzeige der Ausführungsfälligkeit der Neustartaktion in der ersten Aktionsnachricht oder in einer zweiten Aktionsnachricht zu übertragen, die von der Ausführungsentität generiert und in der Datenverbindungsschicht übertragen wird.

14. Überwachungsvorrichtung (13) eines Fernkommunikationsnetzes, die konfiguriert ist, den Neustart eines Residential Gateways zu überwachen, das einerseits mit dem Fernkommunikationsnetz und andererseits mit einem lokalen Netz verbunden ist, wobei die Überwachungsvorrichtung einen Prozessor enthält, der operativ mit einem Speicher gekoppelt und konfiguriert ist, um:
- Informationen bezüglich des Gateways, bezüglich eines Zwischenfalls oder einer Funktionsstörung zu erhalten,
- eine Entscheidung des Herunterfahrens des Gateways zu treffen, und
- an eine Ausführungsentität des Fernkommunikationsnetzes mindestens eine Steuernachricht (ACTION (Typ, Parameter)) zu übertragen, die eine auszuführende Herunterfahraktion des Gateways, eine Zeitanzeige der Ausführungsfälligkeit der Herunterfahraktion, eine Neustartaktion des Gateways und eine Zeitanzeige der Ausführungsfälligkeit der Neustartaktion enthält.

15. Computerprogramm, das Anweisungen zur Durchführung aller Schritte eines Verfahrens nach einem der Ansprüche 1 bis 11 aufweist, wenn dieses Programm von einem Prozessor ausgeführt wird.

## Claims

1. Method for rebooting a residential gateway (111, 112, 11n) connected on the one hand to a wide-area communication network and on the other hand to a local network, wherein said gateway implements the following steps:
- receiving a first action message comprising at least an action to be executed turn off said gateway and an indicator of time of execution of the action turn off, said first action message being generated by an executing entity of the wide-area communication network and transmitted in the data link layer, on detection of an incident or a malfunction,
- storing a configuration context of the local network associated with said gateway,
- turning off said gateway at the time indicated by the indicator of time of execution of the action turn off, and
- rebooting said gateway at a time indicated by an indicator of time of execution of an action reboot depending on said configuration context stored beforehand, said action reboot said gateway and said indicator of time of execution of the action reboot being comprised in said first action message or in a second action message generated by said executing entity and transmitted in the data link layer.

2. Rebooting method according to Claim 1, **characterized in that** said gateway also transmits, to said executing entity or to a supervising device of the wide-area communication network, said configuration context of the local network.

3. Rebooting method according to either one of Claims 1 to 2, **characterized in that** said gateway also transmits, to said executing entity, an announcement message (PW_REBOOT_CAP_ANNOUNCE) indicating the one or more actions able to be executed by said gateway, said announcement message being transmitted during the connection of the gateway to the wide-area communication network, and/or periodically, and/or in response to a discovery message (PW_REBOOT_CAP_DISCOVER) transmitted by the executing entity.

4. Rebooting method according to any one of Claims 1 to 3, **characterized in that** said gateway also records information on the configuration of said gateway, and transmits said configuration information to said executing entity or to a supervising device of the wide-area communication network.

5. Method for controlling the reboot of a residential gateway connected on the one hand to a wide-area communication network and on the other hand to a local network, implemented in an executing entity of the wide-area communication network, wherein said executing entity implements the following steps:
- generating a first action message comprising at least an action to be executed turn off said gateway and an indicator of time of execution of the action turn off, said first action message being generated on detection of an incident or a malfunction,
- transmitting said first action message to said gateway, said first action message being transmitted in the data link layer, and
- transmitting an action to be executed reboot the gateway and an indicator of time of execution of the action reboot, in said first action message or in a second action message generated by said executing entity and transmitted in the data link layer.

6. Control method according to Claim 5, **characterized in that** said step of generating a first action message implements the following substeps:
- receiving at least one command message (ACTION (Type, Parameters)) from a supervising device of the wide-area communication network, comprising the action to be executed turn off said gateway, the action to be executed reboot said gateway, at least the indicator of time of execution of the action turn off and the indicator of time of execution of the action reboot said gateway, and
- generating said first action message, taking into account at least the action turn off and the indicator of time of execution of the action turn off, and optionally the second action message, taking into account the action to be executed reboot said gateway and the indicator of time of execution of the action reboot.

7. Control method according to Claim 6, **characterized in that** said at least one command message comprises a configuration parameter belonging to the group comprising:
- an identifier of the gateway,
- a security key,
- the indicator of time of execution of the action turn off,
- the indicator of time of execution of the action reboot, and
- an activation of dispatch of a report to the supervising device after execution of the action turn off and/or reboot.

8. Control method according to any one of Claims 5 to 7, **characterized in that** said executing entity implements a prior step of verifying the ability of the gateway to execute an action required by the executing entity, said verifying step comprising transmitting a discovery message (PW_REBOOT _CAP_DISCOVER) that interrogates said gateway on its abilities, and receiving an announcement message (PW_REBOOT_CAP_ANNOUNCE) that indicates the one or more actions able to be executed by said gateway.

9. Method for supervising the reboot of a residential gateway (111, 112, 11n) connected on the one hand to a wide-area communication network and on the other hand to a local network, wherein a supervising device of said wide-area communication network implements the following steps:
- obtaining information relating to the gateway, relating to an incident or a malfunction;
- deciding between an action turn off and an action reboot said gateway, and
- transmitting, to an executing entity of the wide-area communication network, at least one command message (ACTION (Type, Parameters)) comprising an action turn off said gateway, an action reboot said gateway, an indicator of time of execution of the action turn off and an indicator of time of execution of the action reboot.

10. Supervising method according to Claim 9, **characterized in that** said supervising device implements the following steps, prior to the turn-off of said gateway:
- receiving a configuration context of the local network associated with said gateway, and
- duplicating and activating said configuration context in a standby access point.

11. Supervising method according to Claim 10, **characterized in that** an equipment of the local network uses the identifier of said gateway in the local network to connect to the wide-area communication network via said standby access point.

12. Residential gateway (111, 112, 11n), connected on the one hand to a wide-area communication network and on the other hand to a local network, said gateway comprising a processor that is operationally coupled to a memory, and configured to:
- receive a first action message comprising at least an action to be executed turn off said gateway and an indicator of time of execution of the action turn off, said first action message being generated by an executing entity of the wide-area communication network and transmitted in the data link layer,
- store, in said memory, a configuration context of the local network associated with said gateway,
- turn off the gateway at the time indicated by the indicator of time of execution of the action turn off, and
- reboot said gateway at a time indicated by an indicator of time of execution of an action reboot depending on said configuration context stored beforehand, said action reboot said gateway and said indicator of time of execution of the action reboot having been transmitted in said first action message or in a second action message generated by said executing entity and transmitted in the data link layer.

13. Executing entity (14) of a wide-area communication network, said entity being configured to control the reboot of a residential gateway connected on the one hand to the wide-area communication network and on the other hand to a local network, said executing entity comprising a processor that is operationally coupled to a memory, and configured to:
- generate, on detection of an incident or a malfunction, a first action message comprising at least an action to be executed turn off said gateway and an indicator of time of execution of the action turn off,
- transmit said first action message to said gateway, said first action message being transmitted in the data link layer, and
- transmitting an action to be executed reboot the gateway and an indicator of time of execution of the action reboot, in the first action message or in a second action message generated by said executing entity and transmitted in the data link layer.

14. Device (13) for supervising a wide-area communication network, configured to supervise the reboot of a residential gateway connected on the one hand to the wide-area communication network and on the other hand to a local network, said supervising device comprising a processor that is operationally coupled to a memory, and configured to:
- obtain information relating to the gateway, relating to an incident or a malfunction,
- make a decision to turn off said gateway, and
- transmit, to an executing entity of the wide-area communication network, at least one command message (ACTION (Type, Parameters)) comprising an action turn off said gateway, an indicator of time of execution of the action turn off, an action reboot said gateway, and an indicator of time of execution of the action reboot.

15. Computer program comprising instructions for implementing all the steps of a method according to any one of Claims 1 to 11 when this program is executed by a processor.
